# FASCICULE DE BREVET EUROPEEN

(11) **EP 1 056 587 B1**
(45) Date de publication et mention de la délivrance du brevet: **31.07.2002**
(21) Numéro de dépôt: 99902593.5
(22) Date de dépôt: 04.02.1999
(51) Int. Cl.: B29C 70/32, B29C 53/56, B29C 33/38, B63B 9/06

(54) **TECHNIQUE DE FABRICATION DE CORPS FLOTTANTS EN RESINES SYNTHETIQUES RENFORCEES PAR DES FIBRES CONTINUES ET REALISES SUR MACHINE A BOBINER**
VERFAHREN UND VORRICHTUNG ZUM HERSTELLEN VON SCHWIMMKÖRPERN AUS ENDLOSFASERVERSTÄRKTEM KUNSTSTOFF MIT EINER WICKELMASCHINE
TECHNIQUE FOR MAKING FLOATING OBJECTS IN SYNTHETIC RESINS REINFORCED WITH CONTINUOUS FIBRES AND MADE ON WINDING MACHINERY

(30) Priorité: 05.02.1998 FR 9801575
(43) Date de publication de la demande: 06.12.2000
(73) Titulaire: Coriolis Composites, 69001 Lyon (FR)
(72) Inventeur: Hamlyn, Alexander, 69001 Lyon (FR); Gallet, Clémentine, 69001Lyon (FR)
(74) Mandataire: Bratel, Gérard
(86) Numéro de dépôt international: FR9900243
(87) Numéro de publication internationale: WO9939897

(56) Documents cités:
- EP-A- 0 216 695
- FR-A- 1 590 718
- US-A- 3 265 795
- US-A- 3 300 355
- US-A- 4 494 910
- US-A- 4 849 150

## Description

L'invention concerne la technique de fabrication de corps flottants en résines synthétiques renforcées par des fibres continues et réalisés sur machine à bobiner.

Les corps flottants en résines synthétiques renforcées par des fibres sont fabriqués traditionnellement par moulage par contact de fibres découpées et imprégnées de résine, sur des moules femelles ou des maîtres modèles en plusieurs parties. Les phases de découpe, de dépose et d'imprégnation, hormis le cas des fibres pré-imprégnées, s'effectuent en général manuellement. Les fibres se présentent sous forme de tissus unidirectionnels, bidirectionnels ou tridirectionnels ou sous forme de fibres courtes orientées aléatoirement.

Ce procédé présente l'inconvénient de mettre en contact des fibres de renfort non continues et non contraintes : d'où des caractéristiques mécaniques non prévisibles, et une résine appliquée manuellement : d'où un taux de résine en général irrégulier. Ces deux caractéristiques entraînent une augmentation inutile du poids.

Ce procédé n'est qu'en partie automatisable. En raison du travail obligatoirement manuel, les temps de fabrication ne peuvent être améliorés.

Ce temps de fabrication important permet difficilement de fabriquer une grande pièce complexe, comme le pont et la coque d'un voilier qui sont rarement solidifiés en une seule fois et en même temps ; ainsi, les caractéristiques mécaniques du produit fini sont limitées en raison des assemblages effectués après solidification qui fragilisent la structure, par exemple la liaison pont-coque d'un bateau. De plus, ces assemblages augmentent les risques de délaminage ou de décollement du composite aux points de liaison, avec la présence des chants aux joints de collage sur les différentes pièces assemblées, risques non négligeables dans l'eau.

De plus, l'imprégnation par contact des fibres ne permet pas l'utilisation de certaines résines aux caractéristiques élevées, nocives par voies respiratoires ou au contact de la peau.

Il existe un procédé, l'enroulement filamentaire, qui consiste à enrouler sur un mandrin ayant la forme de la pièce désirée, des fibres continues imprégnées de résine disposées suivant des directions déterminées à l'avance. Par ce procédé d'enroulement filamentaire, les fibres continues sont enroulées, d'une part dans la direction des contraintes principales de façon homogène, d'autre part localement dans les zones fortement contraintes.

Cette technique présente l'inconvénient de ne pouvoir garantir l'état de surface extérieur des pièces enroulées et de nécessiter, pour certaines applications, des traitements de finition, l'emploi d'un contremoule avant solidification ou un usinage après solidification Dans ce domaine, citons le document US 3 265 795 qui décrit « une méthode de moulage d'une peau en matière plastique renforcée de fibres ». Ce procédé qui met en oeuvre un mandrin gonflable et un contremoule apporte une solution au problème d'état de surface extérieur mais ne décrit pas la fabrication de produits à surface non développable. Une autre solution est présentée dans le document US 4 849 150 A qui décrit « une méthode de fabrication de tube en résine renforcée de fibres ». Cette méthode consiste à injecter de la résine dans un contremoule, mais n'est décrite que pour des tubes, et nécessite l'emploi de matériaux spécifiques.

Un autre inconvénient de l'enroulement filamentaire concerne l'enroulement des structures à sections décroissantes, cas habituel dans les engins flottants. La difficulté est de respecter les orientations des fibres et les épaisseurs définies pour la résistance mécanique de la structure. D'une part, dans les sections décroissantes, les fibres peuvent glisser sur le mandrin, et les surépaisseurs obtenues dans les petites sections ne correspondent pas aux épaisseurs souhaitées. D'autre part, la structure obtenue n'est pas symétrique par rapport au plan de symétrie du mandrin. A ce sujet, le document FR 1 590 718 A décrit un « procédé de fabrication de structure de forme quelconque, la machine pour la mise en oeuvre dudit procédé et les structures réalisées par ledit procédé ». Ce procédé permet de déposer des bandes sur un corps avec des sections décroissantes mais ne décrit pas ni l'usage de matière plastique thermodurcissable renforcée par des fibres ni une dépose autre que radiale. Dans ce domaine, citons aussi le document US 3 300 355 A qui décrit « une méthode de fabrication de corps creux de forme irrégulière ». Cette méthode permet de déposer des bandes sur un corps, avec des sections décroissantes et des rainurages pour réaliser des renforts, mais ne décrit ni l'usage de matière plastique thermodurcissable renforcée par des fibres, ni une dépose autre que radiale. Le document US 4 849 150 A qui décrit « une méthode de fabrication de tube en résine renforcée de fibres », déjà cité, ne décrit pas une méthode spécifique d'enroulement permettant d'obtenir une structure symétrique sans surépaisseur.

Un autre inconvénient du procédé d'enroulement filamentaire est la fabrication et la récupération du mandrin après le bobinage. Le document US 4 494 910 A qui décrit la fabrication de « composants de structure présentant une grande superficie, en particulier les palles de rotors » présente une technique où le mandrin est conservé dans la pièce finale, mais ne décrit pas la fabrication de pièces creuses. Dans le document EP 0 216 695 A décrit « un procédé et une machine pour la fabrication de pièces creuses de révolution formées de fils s'étendant selon trois directions différentes ». Ce procédé présente une solution où le mandrin est usiné sur la machine à bobiner, mais il n'est décrit que pour des pièces creuses de révolution. Le document US 3 265 795, déjà cité, qui décrit « une méthode de moulage d'une peau en matière plastique renforcée de fibres » présente une méthode pour la récupération du mandrin, en réalisant deux pièces ensemble, mais ne décrit pas une méthode pour la fabrication d'une seule pièce.

L'invention peut apporter une solution aux inconvénients rencontrés actuellement dans la fabrication des corps flottants en matériaux composites synthétiques, en les réalisant avec des fibres continues sur une machine à bobiner, après avoir résolu les problèmes posés par ce procédé de fabrication actuellement inadapté à la réalisation de tels produits.

L'invention concerne notamment un procédé de fabrication d'un corps flottant tel que coque de bateau ou partie d'une telle coque défini dans les revendications et qui comporte au moins une étape d'enroulement filamentaire.

Ce procédé comporte selon les réalisations, la combinaison d'étapes prévoyant de :
- réaliser un premier mandrin en forme d'ébauche, présentant sensiblement la forme externe du corps flottant à fabriquer ;
- monter ce premier mandrin sur un appareil à bobiner, et éventuellement lui faire subir un traitement d'affinage de sa forme externe ;
- recouvrir ce premier mandrin au moins en partie, par bobinage ou enroulement filamentaire de fibres imprégnées de résine afin d'obtenir un moule extérieur ou contremoule dont la surface interne subira un traitement, tel que revêtement d'un démoulant et/ou d'enduit de finition constituant la surface externe du corps flottant à fabriquer ;
- après solidification, découper le contremoule en au moins deux parties démoulables, par exemple suivant un plan de symétrie longitudinal ;
- réaliser un deuxième mandrin en forme d'ébauche, présentant sensiblement la forme interne du corps flottant à fabriquer ;
- monter ce deuxième mandrin sur un appareil à bobiner, et éventuellement lui faire subir un traitement d'affinage de sa forme externe ;
- recouvrir ce deuxième mandrin au moins en partie, par bobinage ou enroulement filamentaire avec ou sans imprégnation de résine, pour obtenir un corps bobiné qui sera le corps flottant ;
- mettre sous pression les matériaux du corps flottant entre le deuxième mandrin et le contremoule ;
- après solidification des matériaux du corps flottant, telle que polymérisation, dégager le contremoule et/ou faire subir un traitement d'affinage au corps flottant, découper au moins une réservation dans ce dernier, par exemple pour le passage ou l'assemblage d'équipements tels que mâts, quille, rouf ou analogues et/ou pour l'évacuation d'au moins une partie du mandrin.

Un deuxième objet de l'invention est l'obtention des mandrins destinés à la mise en oeuvre du procédé selon les revendications. Un troisième objet de l'invention est l'appareil destiné à la mise en oeuvre du procédé selon les revendications.

Selon des caractéristiques de l'invention :
- Les traitements d'affinage des surfaces externes des mandrins prévoient la mise en place de dispositifs d'aide à l'enroulement, de matière et de dimensions convenables, tels que picots et/ou produits anti-dérapants, permettant une augmentation de l'adhérence entre le mandrin et les fibres qui viendront le recouvrir.
- L'étape de recouvrement du premier mandrin comporte au moins une phase de dépose d'au moins une fibre continue imprégnée ou non de résine, suivant des directions définies lors de la conception du contremoule. Les trajectoires des fibres sont symétriques par rapport à au moins un plan de symétrie du premier mandrin, avec des zones de retournement dans différentes sections du mandrin afin d'obtenir au moins une couche de fibres dont les épaisseurs sont définies à la conception du contremoule.
- L'étape de recouvrement du deuxième mandrin comporte au moins une phase de dépose d'au moins une fibre continue imprégnée ou non de résine, suivant des directions définies lors de la conception du corps flottant. Les trajectoires des fibres sont symétriques par rapport à au moins un plan de symétrie du deuxième mandrin, avec des zones de retournement dans différentes sections du mandrin afin d'obtenir au moins une couche de fibres dont les épaisseurs sont définies à la conception du corps flottant.
- L'étape de mise sous pression des matériaux du corps flottant prévoit une augmentation du volume du deuxième mandrin et/ou une infusion et/ou une Injection de résine et/ou une expansion de résine telle que résine moussante afin d'obtenir d'une part un état de surface identique à celui de la surface interne du contremoule, d'autre part un taux de résine déterminé.

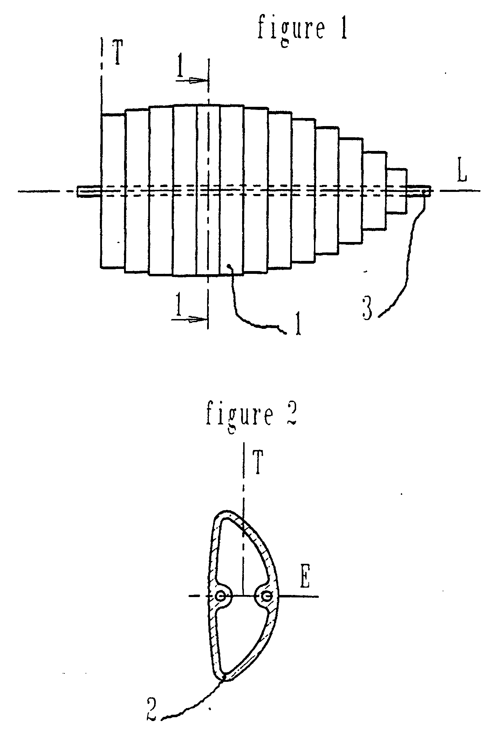

A titre d'exemple on a décrit ci-dessous et illustré schématiquement sur les dessins annexés figures 1 à 14, une forme de réalisation de l'objet de l'invention, figures sur lesquelles sont représentées trois directions orthogonales L, T et E. La direction longitudinale, nommée L, correspond à l'axe de rotation de l'appareil à bobiner et à la direction de marche normale du corps flottant. La direction transversale, nommée T, est orthogonale à la direction L et située dans un plan horizontal passant par L. La direction en élévation E est orthogonale aux directions L et T.
- la figure 1 est une vue en plan schématique du premier mandrin en forme d'ébauche,
- la figure 2 est une vue en coupe de face d'un élément en mousse synthétique du premier mandrin, vue suivant la ligne 1-1 de la figure 1,
- la figure 3 est une vue en plan schématique du premier mandrin monté sur l'appareil à bobiner en cours d'usinage,
- la figure 4 est une vue en plan schématique du premier mandrin monté sur l'appareil à bobiner en cours d'enroulement du contremoule,
- la figure 5 est une vue en plan schématique du premier mandrin et du contremoule découpé en deux parties symétriques en cours de démoulage,
- la figure 6 est une vue en coupe de face du premier mandrin et du contremoule découpé en deux parties symétriques en cours de démoulage, vue suivant la ligne 2-2 de la figure 5,
- la figure 7 est une vue en plan schématique du deuxième mandrin avec des rainures transversales suivant la direction T et longitudinales suivant la direction L, constitué soit à partir d'un élément gonflable, soit à partir d'éléments en mousse synthétique,
- la figure 8 est une vue en élévation latérale du deuxième mandrin dans le cas où il a la forme de deux engins flottants identiques réunis par leur partie supérieure,
- la figure 9 est une vue en coupe de face du deuxième mandrin dans le cas où il a la forme de deux engins flottants identiques réunis par leur partie supérieure, vue suivant la ligne 3-3 de la figure 8,
- la figure 10 est une vue en plan schématique du deuxième mandrin monté sur l'appareil à bobiner en cours de bobinage des renforts du corps flottant,
- la figure 11 est une vue en plan schématique du corps flottant bobiné et des deux éléments du contremoule en cours d'assemblage, en vue de la mise sous pression des matériaux du corps flottant,
- la figure 12 est une vue en coupe de face du corps flottant bobiné et des deux éléments du contremoule en cour d'assemblage, en vue de la mise sous pression des matériaux du corps flottant, vue suivant la ligne 4-4 de la figure 11,
- la figure 13 est une vue en plan schématique d'une structure bobinée seule.
- La figure 14 est une vue en perspective d'une structure bobinée seule.

L'exposé qui suit permet de comprendre comment est réalisée cette invention et quelles sont les nouvelles performances apportées.

Avant toute fabrication, une étude, effectuée à la conception, a permis de connaître la forme du corps flottant à fabriquer et les différentes contraintes qui lui seront soumises. Une partie de cette étude, appelée échantillonnage, définit l'épaisseur et le nombre de couches, l'orientation des fibres dans les différentes zones du corps flottant ainsi que l'orientation, les dimensions et les emplacements des différents renforts.

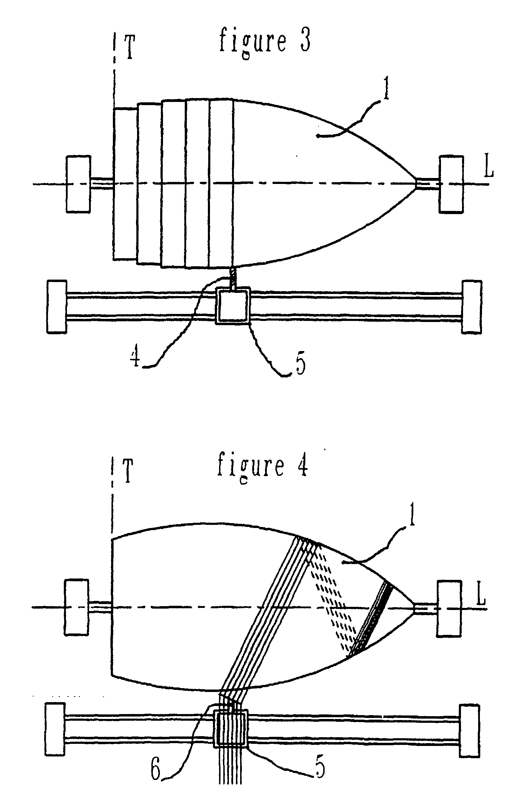

Dans le cas où il est prévu la fabrication d'un contremoule 7, notamment pour la production en série de corps flottant, un premier mandrin 1 en forme d'ébauche est réalisé. Constitué par exemple d'anneaux de mousse polystyrène haute densité, référencés 2 sur la figure 2, il est divisé en différentes sections transversales d'une épaisseur donnée, prédécoupées par exemple au fil chaud, à l'extérieur et à l'intérieur, de façon à conserver une épaisseur minimum nécessaire pour résister aux efforts du bobinage. Ce premier mandrin 1 est représenté schématiquement sur la figure 1. Les anneaux 2 sont enfilés, collés et serrés longitudinalement, par exemple sur deux axes 3 permettant l'entraînement en rotation de l'ensemble. Ce mandrin en forme d'ébauche 1 est ensuite monté sur l'appareil à bobiner pour subir un traitement d'affinage de sa forme extérieure. Par exemple, comme cela est représenté sur la figure 3, un outil de fraisage 4 placé sur le porte outil 5 asservi dans trois axes de l'appareil à bobiner, usine le mandrin 1 asservi en rotation de façon à obtenir la forme extérieure du corps flottant 11. Un enduit de finition, par exemple projeté par un système de pulvérisation monté sur le porte outil 5, est appliqué sur tout le mandrin 1. Des opérations de ponçage et de lustrage pourront ensuite être effectuées avec des ponceuses et des lustreuses montées sur le porte outil 5. Ce mandrin 1 peut aussi être réalisé à partir d'un corps flottant existant, lui-même éventuellement réalisé suivant le procédé de la présente invention. La fabrication et la préparation du premier mandrin 1 sont alors terminées.

Un agent démoulant et un enduit de finition constituant la surface interne du contremoule 7 sont projetés sur tout le mandrin 1 par un système de pulvérisation monté sur le porte outil 5. Sur la figure 4, le bobinage est effectué en orientant les fibres de façon à obtenir l'échantillonnage spécifique au contremoule 7, à l'aide d'un peigne 6 monté sur le porte outil 5, qui permet le guidage des fibres imprégnées de résine.

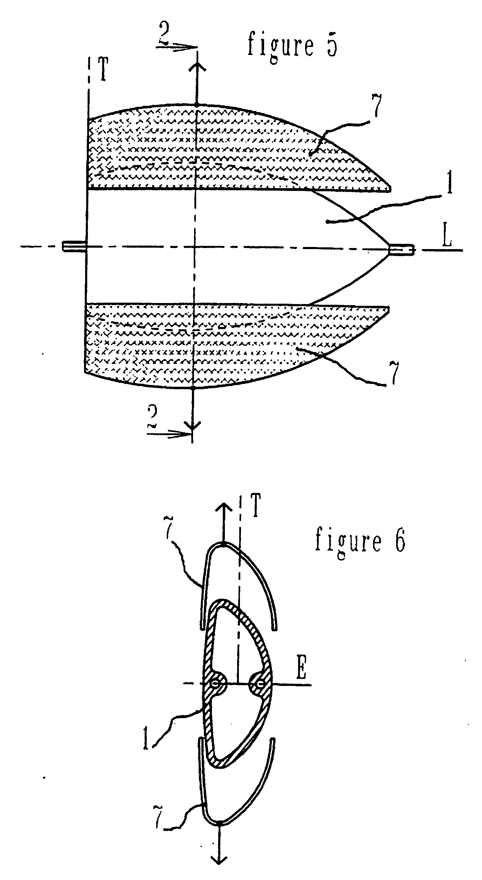

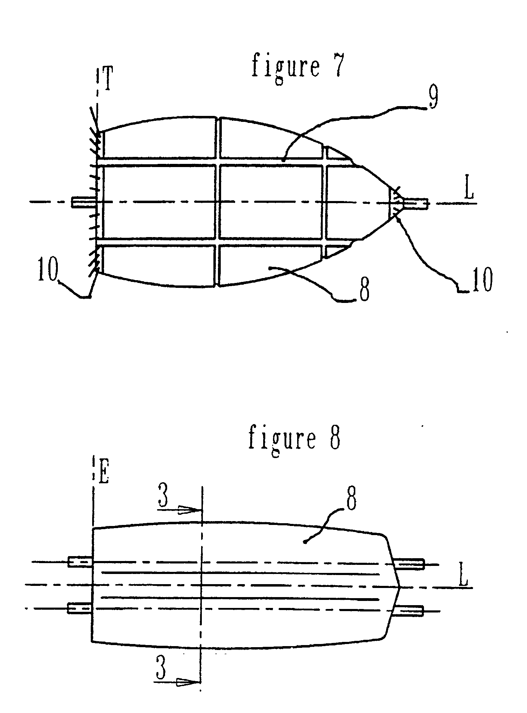

Sur les figures 5 et 6, le contremoule 7 a été découpé après solidification, par exemple dans son plan de symétrie longitudinal, grâce à un outil de découpe, par exemple une scie à disque, monté sur le porte outil 5. Ainsi le contremoule 7 est démoulé du mandrin 1. L'étape de fabrication du contremoule 7 est alors terminée.

Un deuxième mandrin 8 présente sensiblement la forme interne du corps flottant à fabriquer 11. Il peut posséder d'une part des rainures 9 longitudinales et transversales permettant de bobiner et de disposer des renforts de structure et des supports d'accastillage, d'autre part des éléments rigides à ses extrémités, permettant la mise en place de dispositifs en relief 10, comme cela est représenté schématiquement sur la figure 7. D'autres dispositifs tels que des produits anti-dérapant peuvent être placés sur le mandrin 8 pour augmenter l'adhérence des fibres qui viendront le recouvrir.

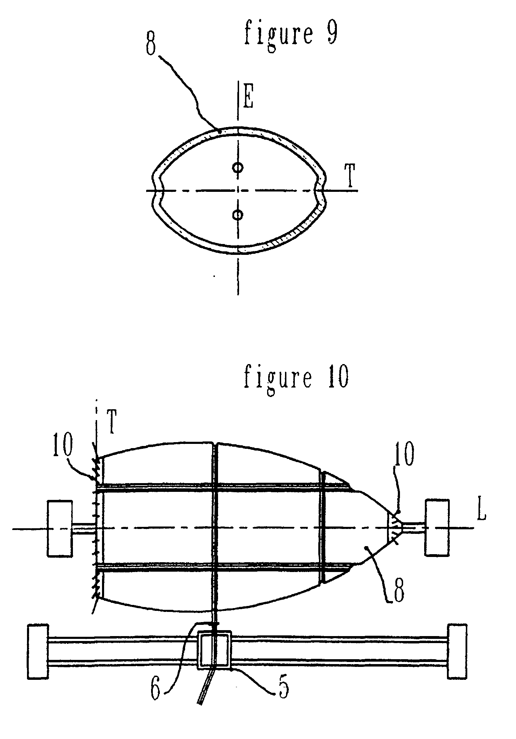

Ce mandrin 8 peut être constitué de différents éléments décrits ci-après :
- soit à partir d'un élément gonflable,
- soit, de manière similaire au premier mandrin 1, à partir d'éléments en mousse synthétique usinés, possédant éventuellement des sections intermédiaires placées entre ces éléments, par exemple des plaques en sandwich destinées à rester dans le corps flottant comme cloisons de structure,
- soit à partir d'éléments, par exemple en matériaux composites synthétiques, correspondant à la forme de deux corps flottants identiques réunis par leur partie supérieure, par exemple deux coques de voiliers accolées par leur pont comme le montrent la figure 8 et la figure 9.

Ce mandrin 8 est ensuite monté sur l'appareil à bobiner pour subir éventuellement un traitement d'affinage de sa surface externe. Par exemple, un agent démoulant projeté par un système de pulvérisation monté sur le porte outil 5, est ensuite appliqué sur tout ou une partie du mandrin 8. La fabrication et la préparation du deuxième mandrin 8 sont alors terminées.

Le bobinage du corps flottant est effectué à l'aide d'un peigne monté sur le porte outil, qui permet le guidage des fibres. Il débute par exemple par l'enroulement de fibres continues dans des rainures, qui peuvent être entièrement remplies pour obtenir une structure de renfort monolithique, ou en partie en intercalant une âme au cours du bobinage, par exemple en mousse P.V.C. ou balsa, pour obtenir une structure de renfort dite sandwich. Le bobinage du reste de la forme 8 est effectué en déposant les fibres de façon à obtenir l'échantillonnage défini lors de la conception, symétrique par rapport à l'axe de symétrie du corps flottant. Par exemple, pour un corps flottant de type voilier monocoque, les fibres sont principalement orientées à 45° et à 0° par rapport au plan de symétrie du corps flottant. Elles sont bobinées sur une première trajectoire à 45° par rapport à l'axe de rotation du mandrin jusqu'à une zone dite de retournement, située entre deux sections transversales du mandrin et définie à la conception du voilier. Dans cette zone, les fibres sont déposées, grâce à des aides à l'enroulement tels que picots ou produits anti-dérapant, de manière à rejoindre le plan de symétrie du voilier. Elles suivent ensuite une deuxième trajectoire symétrique à la première trajectoire, par rapport au plan de symétrie. Lors de la conception d'un voilier, il est par exemple établi que les zones de retournement doivent se situer dans des zones fortement contraintes telles que le fond de la coque entre la quille et l'étrave du voilier, et aux extrémités du corps flottant. Pour le bobinage des fibres à 0°, les zones de retournement sont situées aux extrémités où sont disposées des aides à l'enroulement tels que picots.

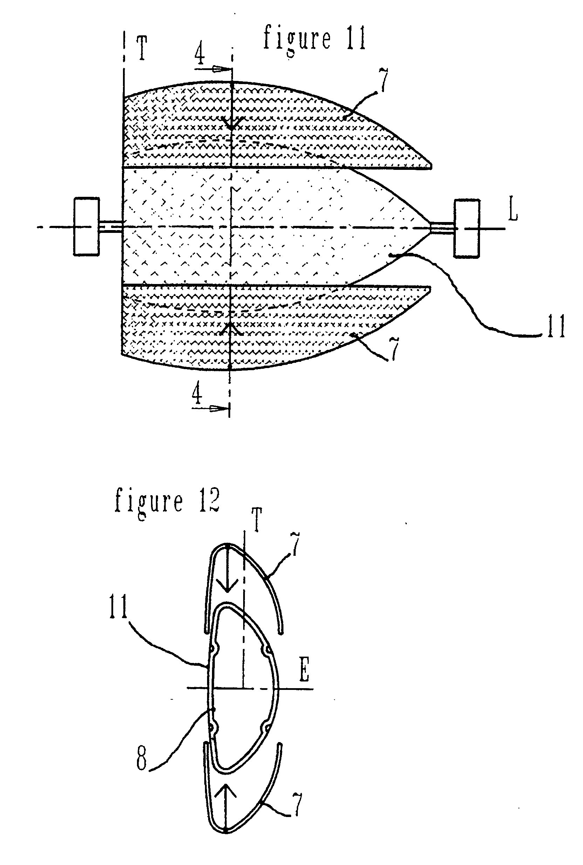

Un agent démoulant et un enduit de finition sont appliqués sur la partie interne du contremoule 7. Sur la figure 11 et la figure 12, le corps flottant bobiné 11 est serré entre le deuxième mandrin 8 et les deux éléments du contremoule 7.

Par exemple, dans le cas d'un deuxième mandrin 8 gonflable, le contremoule 7 peut être mis en place après avoir réduit légèrement le volume du mandrin 8 par dégonflage. Les matériaux du corps flottant 11 sont ensuite plaqués sur la surface interne du contremoule 7, en augmentant le volume du mandrin 8 par gonflage, afin d'obtenir d'une part une cohésion optimale entre les matériaux du corps flottant 11 et la surface interne du contremoule 7, d'autre part un taux de résine déterminé. Cette variation de volume peut aussi être obtenue mécaniquement, notamment dans le cas où le deuxième mandrin 8 a la forme de deux engins flottants identiques. Cette opération peut également inclure l'infusion ou l'injection de résine ou l'utilisation d'une résine expansive, notamment dans le cas où le volume du deuxième mandrin 8 ne varie pas.

Après solidification des matériaux, les différents éléments du contremoule 7 sont dégagés.

Le corps flottant 11 peut être découpé, par exemple à l'aide d'une scie à disque montée sur le porte outil 5, notamment dans le cas d'un voilier pour le passage et l'assemblage d'équipements tels que mâts, quille, cadènes, roufs ou pour l'évacuation du mandrin 8.

Dans le cas d'une fabrication sans contremoule, notamment pour des réalisations à l'unité, la surface extérieure du corps flottant 11 pourra subir un traitement d'affinage, tel que ponçage et projection d'un enduit de finition, à l'aide d'un outillage spécifique monté sur le porte outil 5.

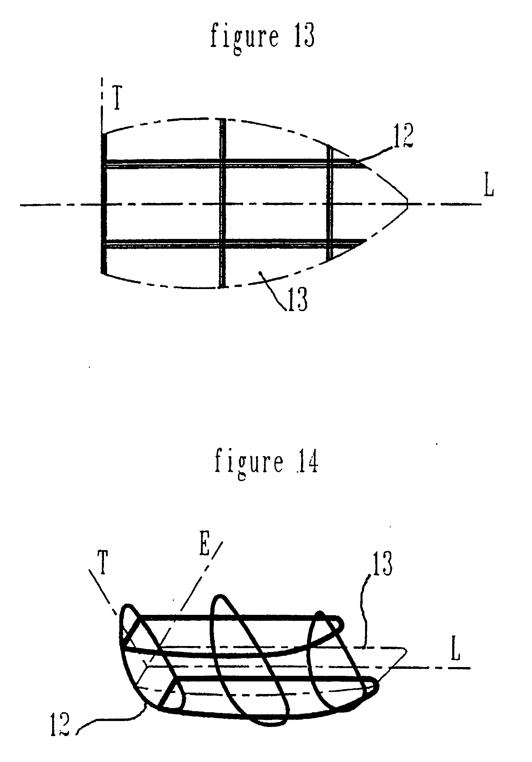

Pour la fabrication d'une structure bobinée, référencée 12 sur la figure 13 et la figure 14, destinée à être intégrée dans un corps flottant quelconque, le mandrin peut être constitué d'éléments rigides permettant d'enrouler uniquement des renforts définis.

Les avantages d'une telle fabrication sont considérables à trois niveaux :
- la production est optimisée et entièrement automatisée, grâce à l'emploi de logiciels de conception, de calculs par éléments finis, de simulation d'enroulement et de programmation de commande numérique. L'appareil à bobiner devient un centre automatisé d'usinage, de pulvérisation, de bobinage et de découpage. Ainsi, le risque de non conformité est limité, d'une part grâce à l'automatisation qui garantit la reproductibilité du produit fabriqué, d'autre part grâce à la réalisation des différentes opérations par l'intermédiaire d'un unique porte-outil.
- le produit fini possède des caractéristiques mécaniques élevées d'une part grâce à l'approche numérique qui permet une optimisation, d'autre part grâce à la solidification du composite avec des fibres contraintes et continues. De plus, le taux de résine du composite est parfaitement maîtrisé en cours de fabrication et reste relativement faible par rapport à celui obtenu par moulage par contact. Dans le cas d'un voilier où le pont et la coque sont enroulés en même temps, les fibres étant continues sur toute la circonférence du voilier, la rigidité de la structure est augmentée et les risques de délaminage diminués.
- le positionnement des appendices et de l'accastillage du corps flottant est beaucoup plus précis grâce au découpage automatisé, qui élimine les défauts actuels de symétrie.
- le coût de la fibre continue présentée sous forme de fils en bobines ou pelotes est le plus économique.

Le dispositif, selon l'invention, est particulièrement adapté à la fabrication en série ou à l'unité d'au moins une partie de corps flottants, telle que renforts, pont, coque d'engins flottants, à moteur ou à voile, monocoques ou multicoques, d'usage professionnel, en course, en exploration, ou d'usage amateur.

## Revendications

1. Procédé de fabrication de corps flottants (11), tels que coque de bateau ou partie d'une telle coque, **caractérisé en ce qu'**il comporte la combinaison d'étapes prévoyant de :
- réaliser un premier mandrin en forme d'ébauche (1), présentant sensiblement la forme externe du corps flottant à fabriquer (11);
- monter le mandrin (1) sur un appareil à bobiner, et éventuellement lui faire subir un traitement d'affinage de sa forme externe ;
- recouvrir le premier mandrin (1) au moins en partie, par bobinage ou enroulement filamentaire de fibres imprégnées de résine afin d'obtenir un moule extérieur ou contremoule (7) dont la surface interne subira un traitement, tel que revêtement d'un démoulant et/ou d'enduit de finition constituant la surface externe du corps flottant à fabriquer ;
- après solidification, découper le contremoule (7) en au moins deux parties démoulables, par exemple suivant un plan de symétrie longitudinal ;
- réaliser un deuxième mandrin en forme d'ébauche (8), présentant sensiblement la forme interne du corps flottant à fabriquer (11) ;
- monter le deuxième mandrin (8) sur un appareil à bobiner, et éventuellement lui faire subir un traitement d'affinage de sa forme externe ;
- recouvrir le deuxième mandrin (8) au moins en partie, par bobinage ou enroulement filamentaire avec ou sans imprégnation de résine, pour obtenir un corps bobiné qui sera le corps flottant (11);
- mettre sous pression les matériaux du corps flottant entre le deuxième mandrin (8) et le contremoule (7) ;
- après solidification des matériaux du corps flottant (11), telle que polymérisation, dégager le contremoule (7) et/ou faire subir un traitement d'affinage au corps flottant (11), découper au moins une réservation dans ce dernier, par exemple pour le passage ou l'assemblage d'équipements tels que mâts, quille, rouf ou analogues et/ou pour l'évacuation d'au moins une partie du mandrin (8).

2. Procédé selon la revendication 1 **caractérisé en ce que** l'étape de réalisation du premier mandrin (1) comporte une phase d'assemblage d'éléments (2) en matière synthétique telle que mousse polystyrène et/ou une phase de gonflage d'un élément de ce premier mandrin (1).

3. Procédé selon l'une des revendications 1 à 2, **caractérisé en ce que** le traitement d'affinage de la forme externe du premier mandrin (1) prévoit un ponçage et/ou usinage tels que fraisage et/ou tournage et un traitement de surface tel que revêtement d'un démoulant et d'enduit de finition et la mise en place de dispositifs, de matière et de dimensions convenables tels que des picots et/ou des produits antidérapants, permettant une augmentation de l'adhérence entre le mandrin et les fibres qui viendront le recouvrir.

4. Procédé selon l'une des revendications 1 à 3 **caractérisé en ce que** l'étape de recouvrement du premier mandrin (1) comporte une phase de liaison du contremoule à fabriquer (7) à au moins un organe de structure tel que renfort et/ou âme sandwich.

5. Procédé selon l'une des revendications 1 à 4 **caractérisé en ce que** l'étape de recouvrement du premier mandrin (1) comporte une phase de dépose d'au moins une fibre continue imprégnée ou non de résine, suivant des directions prédéfinies lors de la conception du contremoule (7), afin d'obtenir au moins une couche de fibres dont chaque trajectoire possède un plan de symétrie confondu avec un plan de symétrie du premier mandrin (1), avec des zones de retournement situées entre différentes sections transversales du mandrin.

6. Procédé selon l'une des revendications 1 à 5, **caractérisé en ce que** les étapes de découpage du contremoule (7) sont réalisées par montage sur l'appareil à bobiner d'un outil de découpe tel que fraise, disque ou système à projection de particule dit « laser », ce découpage étant par exemple réalisé suivant au moins un plan longitudinal, ou transversal ou en élévation.

7. Procédé selon l'une des revendications 1 à 6 **caractérisé en ce que** le deuxième mandrin (8) est réalisé de manière similaire au premier mandrin (1), par exemple par assemblage d'éléments en matière synthétique telle que mousse polystyrène prévoyant l'interposition d'au moins un organe de structure tel que cloison, et/ou par gonflage d'au moins un élément de ce mandrin (8).

8. Procédé selon la revendication 1 à 7, **caractérisé en ce que** le traitement d'affinage de la surface externe du deuxième mandrin (8) prévoit un ponçage et/ou usinage tels que fraisage et/ou tournage et un traitement de surface tel que revêtement d'un démoulant et d'enduit de finition et la mise en place de dispositifs, de matière et de dimensions convenables tels que des picots et/ou des produits antidérapants, permettant une augmentation de l'adhérence entre le mandrin (8) et les fibres qui viendront le recouvrir.

9. Procédé selon l'une des revendications 1 à 8 **caractérisé en ce que** l'étape de recouvrement du deuxième mandrin (8) comporte une phase de liaison du corps flottant à fabriquer (11) à au moins un organe de structure tel que renfort et/ou support d'accastillage et/ou âme sandwich.

10. Procédé selon l'une des revendications 1 à 9 **caractérisé en ce que** l'étape de recouvrement du deuxième mandrin (8) comporte une phase de dépose d'au moins une fibre continue imprégnée ou non de résine, suivant des directions prédéfinies lors de la conception du corps flottant, afin d'obtenir au moins une couche de fibres dont chaque trajectoire possède un plan de symétrie confondu avec un plan de symétrie du deuxième mandrin (8), avec des zones de retournement situées entre différentes sections transversales du mandrin.

11. Procédé selon l'une des revendications 1 à 10, **caractérisé en ce que** l'étape de mise sous pression des matériaux du corps flottant (11) prévoit une augmentation du volume du deuxième mandrin (8) et/ou une injection ou infusion de résine et/ou l'expansion d'une résine moussante afin d'obtenir d'une part un état de surface identique à celui de la surface interne du contremoule (7), d'autre part un taux de résine déterminé.

12. Procédé selon l'une des revendications 1 à 11, **caractérisé en ce que** les étapes de découpage du corps flottant (11) sont réalisées par montage sur l'appareil à bobiner d'un outil de découpe tel que fraise, disque ou système à projection de particule dit « laser », découpage qui est par exemple réalisé suivant au moins un plan longitudinal, ou transversal ou en élévation et qui comporte au moins une phase de découpe de réservations par exemple pour le passage et/ou l'assemblage d'équipements tels que mâts, quille, cadènes, rouf ou analogues, et/ou pour l'évacuation d'au moins une partie du deuxième mandrin (8).

13. Procédé selon l'une des revendications 1 à 12, **caractérisé en ce que** le traitement d'affinage de la surface externe du corps flottant (11) prévoit un ponçage et/ou lustrage et/ou un traitement de surface tel que revêtement d'enduit de finition.

14. Mandrin (1) destiné à la mise en oeuvre d'un procédé selon l'une des revendications 1 à 13, **caractérisé en ce qu'**il se compose d'anneaux en mousse synthétique (2) assemblés en forme d'ébauche présentant la forme externe du corps flottant à fabriquer (11).

15. Mandrin (8) destiné à la mise en oeuvre d'un procédé selon l'une des revendications 1 à 13, **caractérisé en ce qu'**il se compose d'anneaux en mousse synthétique (2) assemblés et/ou d'au moins un élément gonflable en forme d'ébauche présentant sensiblement la forme interne du corps flottant à fabriquer (11).

16. Mandrin (8) ou (1) selon les revendications 14 ou 15, **caractérisé en ce qu'**il possède des rainures (9), par exemple longitudinales et transversales et/ou des dispositifs en relief (10), permettant de bobiner et/ou de disposer au moins un organe de structure tel que renfort et/ou support d'accastillage.

17. Appareil de fabrication d'un corps flottant (11) destiné à la mise en oeuvre d'un procédé selon l'une des revendications 1 à 13, sur lequel est monté un mandrin (8) ou (1) selon l'une des revendications 14 à 16, **caractérisé en ce que** cet appareil possède un axe asservi qui entraîne le mandrin (8) ou (1) en rotation et un porte-outil (5) asservi dans trois axes de translation, le porte-outil (5) étant prévu pour recevoir des outils de découpe tels que fraise (4), disque ou système à projection de particules dit « laser », pour recevoir aussi des outils de projection de produits tels qu'enduit de finition et agent démoulant, et pour recevoir encore des outils de ponçage et lustrage.

18. Appareil de fabrication d'un corps selon la revendication 17, **caractérisé en ce que** le porte-outil (5) est prévu pour recevoir aussi une tête de dépose par exemple de type peigne (6) ou oeillet possédant au moins un degré de liberté en rotation afin de déposer sur le mandrin (8) ou (1) au moins une fibre continue telle que fibre de verre et/ou d'aramide.

19. Corps flottant (11) **caractérisé en ce qu'**il se compose d'au moins une partie de coque fabriquée par un procédé selon l'une des revendications 1 à 13.

20. Corps flottant (11) **caractérisé en ce qu'**il se compose d'au moins une partie de pont fabriquée par un procédé selon l'une des revendications 1 à 13.

21. Engin flottant (11), tel que bateau de plaisance et/ou de compétition et/ou professionnel, **caractérisé en ce qu'**il se compose d'au moins une partie de coque et/ou de pont fabriquées par un procédé selon l'une des revendications 1 à 13.

## Patentansprüche

1. Verfahren zur Herstellung von Schwimmkörpern (11), wie ein Schiffsrumpf oder Teil eines solchen Schiffsrumpfes, **dadurch gekennzeichnet, dass** es die Kombination von Schritten umfasst, die vorsehen:
- eine erste Wickelform in Form eines Rohlings (1) anzufertigen, die deutlich die äußere Form des herzustellenden Schwimmkörpers (11) aufweist;
- die Wickelform (1) auf eine Wickelmaschine zu montieren und sie eventuell einer Behandlung zur Verfeinerung ihrer äußeren Form zu unterziehen;
- die erste Wickelform (1) zumindest teilweise durch bandartiges Umwickeln oder Einrollen mit kunstharzimprägnierten Fasern zu bedecken, um eine Aussenform oder Gegenform (7) zu erhalten, deren Innenfläche einer Behandlung unterzogen wird, wie dem Aufbringen eines Formentrennmittels und/oder eines Deckanstrichs, womit die Außenfläche des herzustellenden Schwimmkörpers gebildet wird;
- nach der Verfestigung die Gegenform (7) in mindestens zwei abnehmbare Teile zu zerschneiden, zum Beispiel einer Symmetrieebene in Längsrichtung folgend;
- eine zweite Wickelform (8) in Form eines Rohlings anzufertigen, der deutlich die innere Form des herzustellenden Schwimmkörpers (11) aufweist;
- die zweite Wickelform (8) auf eine Wickelmaschine zu montieren und sie eventuell einer Behandlung zur Verfeinerung ihrer äußeren Form zu unterziehen;
- die zweite Wickelform (8) zumindest teilweise durch bandartiges Umwickeln oder Einrollen mit oder ohne Kunstharz-Imprägnierung zu bedecken, um einen Wickel-Körper zu erhalten, der der Schwimmkörper (11) sein wird;
- die Materialien des Schwimmkörpers zwischen der zweiten Wickelform (8) und der Gegenform (7) unter Druck zu setzen;
- nach der Verfestigung der Materialien des Schwimmkörpers (11), etwa einer Polymerisation, die Gegenform (7) abzulösen und/oder den Schwimmkörper (11) einer Behandlung zur Verfeinerung zu unterziehen, und mindestens eine Aussparung in diesem letzteren auszuschneiden, die vorgesehen ist zum Beispiel für den Durchlass oder die Montage von Ausrüstungsteilen wie Masten, Kiel, Decksaufbau oder dergleichen und/oder für die Entlüftung zumindest eines Teils der Wickelform (8).

2. Verfahren nach Anspruch 1, **dadurch gekennzeichnet, dass** der Schritt zur Herstellung der ersten Wickelform (1) eine Phase zum Zusammenbau von Elementen (2) aus Kunststoff, wie etwa Polystyrol-Schaum, und/oder eine Phase zum Aufblasen eines Elements dieser ersten Wickelform (1) umfasst.

3. Verfahren nach einem der Ansprüche 1 bis 2, **dadurch gekennzeichnet, dass** die Behandlung zur Verfeinerung der äußeren Form der ersten Wickelform (1) ein Schleifen und/oder eine maschinelle Bearbeitung, wie Fräsen und/oder Drehen, und eine Behandlung der Oberfläche, wie Aufbringen eines Formentrennmittels und eines Deckanstrichs umfasst, sowie das Aufbringen von Mitteln aus geeignetem Material und mit geeigneten Abmessungen, wie Stippen oder Antirutschprodukte, was eine Erhöhung der Adhäsion zwischen der Wickelform und den sie dann bedeckenden Fasern erlaubt.

4. Verfahren nach einem der Ansprüche 1 bis 3, **dadurch gekennzeichnet, dass** der Schritt des Überziehens der ersten Wickelform (1) eine Phase der Verbindung der herzustellenden Gegenform (7) mit mindestens einem Strukturteil umfasst, wie einem Verstärkungselement und/oder einem Sandwich-Steg.

5. Verfahren nach einem der Ansprüche 1 bis 4, **dadurch gekennzeichnet, dass** der Schritt des Überziehens der ersten Wickelform (1) eine Phase des Aufbringens von mindestens einer Endlosfaser umfasst, kunstharzimprägniert oder nicht, nach Richtungen, die bei der Konzeption der Gegenform (7) vorher festgelegt wurden, um mindestens eine Faser-Schicht zu erhalten, deren Bahn jeweils eine Symmetrieebene besitzt, die mit einer Symmetrieebene der ersten Wickelform (1) übereinstimmt, mit Umkehrzonen, die zwischen verschiedenen Querschnitten der Wickelform liegen.

6. Verfahren nach einem der Ansprüche 1 bis 5, **dadurch gekennzeichnet, dass** die Schritte des Aufschneidens der Gegenform (7) ausgeführt werden durch Montage auf die Wickelmaschine eines Schneidwerkzeugs, wie einer Fräse, des Typs Scheibe oder eines "Laser" genannten Partikelprojektions-Systems, wobei dieses Aufschneiden zum Beispiel mindestens einer Longitudinal-, oder Transversal- oder E-levations-Ebene folgend ausgeführt wird.

7. Verfahren nach einem der Ansprüche 1 bis 6, **dadurch gekennzeichnet, dass** die zweite Wickelform (8) in gleichartiger Weise wie die erste Wickelform (1) hergestellt wird, zum Beispiel durch Zusammenbau von Elementen aus Kunststoff, wie Polystyrol-Schaum, wobei die Einfügung von mindestens einem Strukturteil, wie eine Zwischenwand, vorgesehen ist, und/oder durch Aufblasen zumindest eines Elements dieser Wickelform (8).

8. Verfahren nach Anspruch 1 bis 7, **dadurch gekennzeichnet, dass** die Behandlung zur Verfeinerung der Außenfläche der zweiten Wickelform (8) ein Schleifen und/oder eine maschinelle Bearbeitung, wie Fräsen und/oder Drehen, und eine O-berflächen-Behandlung, wie Aufbringen eines Formentrennmittels und eines Deckanstrichs, und das Aufbringen von Mitteln aus geeignetem Material und in geeigneten Abmessungen, wie Stippen und/oder Antirutschprodukte, vorsieht, was eine Erhöhung der Adhäsion zwischen der Wickelform (8) und den sie dann bedeckenden Fasern erlaubt.

9. Verfahren nach einem der Ansprüche 1 bis 8, **dadurch gekennzeichnet, dass** der Schritt des Überziehens der zweiten Wickelform (8) eine Phase der Verbindung des herzustellenden Schwimmkörpers (11) mit mindestens einem Strukturteil, wie einem Verstärkungselement und/oder einem Oberschiff-Lager und/oder einem Sandwich-Steg umfasst.

10. Verfahren nach einem der Ansprüche 1 bis 9, **dadurch gekennzeichnet, dass** der Schritt des Überziehens der zweiten Wickelform (8) eine Phase des Aufbringens von mindestens einer Endlosfaser umfasst, kunstharzimprägniert oder nicht, nach Richtungen die bei der Konzeption des Schwimmkörpers vorher festgelegt wurden, um mindestens eine Faser-Schicht zu erhalten, deren Bahn jeweils eine Symmetrieebene besitzt, die mit einer Symmetrieebene der zweiten Wickelform (8) übereinstimmt, mit Umkehrzonen, die zwischen verschiedenen Querschnitten der Wickelform liegen.

11. Verfahren nach einem der Ansprüche 1 bis 10, **dadurch gekennzeichnet, dass** der Schritt, bei dem die Materialien des Schwimmkörpers (11) unter Druck gesetzt werden, eine Erhöhung des Volumens der zweiten Wickelform (8) und/oder eine Injektion oder Infusion von Kunstharz und/oder die Expansion eines Kunstharzschaums vorsieht, um einerseits einen Oberflächenzustand zu erreichen, der mit demjenigen der Innenfläche der Gegenform (7) identisch ist, andererseits einen bestimmten Harzgehalt zu erreichen.

12. Verfahren nach einem der Ansprüchel bis 11, **dadurch gekennzeichnet, dass** die Schritte, bei denen der Schwimmkörper (11) aufgeschnitten wird, ausgeführt werden durch Montage auf die Wickelmaschine eines Schneidewerkzeugs, wie einer Fräse, des Typs Scheibe oder eines "Laser" genannten Partikelprojektions-Systems, ein Aufschneiden, das zum Beispiel mindestens einer Längs-, Quer- oder Aufriss-Ebene folgend durchgeführt wird, und das mindestens eine Phase umfasst, bei der Aussparungen ausgeschnitten werden, zum Beispiel für den Durchlass und/oder die Montage von Ausrüstungsteilen, wie Masten, Kiel, Rüsteisen, Decksaufbau oder dergleichen, und/oder für die Entlüftung zumindest eines Teils der zweiten Wickelform (8)

13. Verfahren nach einem der Ansprüche 1 bis 12, **dadurch gekennzeichnet, dass** die Behandlung zur Verfeinerung der Außenfläche des Schwimmkörpers (11) ein Schleifen und/oder ein Polieren und/oder eine Oberflächenbehandlung wie das Aufbringen eines Deckanstrichs vorsieht.

14. Wickelform (1), die dazu dient, ein Verfahren nach einem der Ansprüche 1 bis 13 in Gang zu setzen, **dadurch gekennzeichnet, dass** sie aus Ringen (2) aus Kunststoff-Schaum besteht, die in Form eines Rohlings zusammengefügt sind, der die äußere Form des herzustellenden Schwimmkörpers (11) aufweist.

15. Wickelform (8), die dazu dient, ein Verfahren nach einem der Ansprüche 1 bis 13 in Gang zu setzen, **dadurch gekennzeichnet, dass** sie aus zusammengesetzten Ringen (2) aus Kunststoff-Schaum und/oder aus mindestens einem aufblasbaren Element in Form eines Rohlings besteht, der deutlich die innere Form des herzustellenden Schwimmkörpers (11) aufweist.

16. Wickelform (8) oder (1) nach Anspruch 14 oder 15, **dadurch gekennzeichnet, dass** sie Rillen (9) besitzt, zum Beispiel Längs- und Querrillen und/oder Relief-Vorrichtungen (10), die ein Bewickeln und/oder das Anbringen mindestens eines Strukturteils, wie eines Verstärkungselements und/oder eines Oberschiff-Lagers, erlauben.

17. Maschine zur Herstellung eines Schwimmkörpers (11), die dazu bestimmt ist, ein Verfahren nach einem der Ansprüche 1 bis 13 in Gang zu setzen, auf der eine Wickelform (8) oder (1) nach einem der Ansprüche 14 bis 16 montiert ist, **dadurch gekennzeichnet, dass** diese Maschine eine angetriebene Achse besitzt, die die Wickelform (8) oder (1) in Rotation versetzt, und einen angetriebenen Dreiachsen-Werkzeughalter (5), der vorgesehen ist, um Aufschneide-Werkzeuge, wie eine Fräse (4) des Typs Scheibe oder eines "Laser" genannten Partikelprojektions-Systems, aufzunehmen, sowie auch Werkzeuge zum Spritzen von Produkten, wie Deckanstrich und Formentrennmittel, aufzunehmen, und um überdies Werkzeuge zum Schleifen und Polieren aufzunehmen.

18. Maschine zur Herstellung eines Körpers nach Anspruch 17, **dadurch gekennzeichnet, dass** der Werkzeughalter (5) vorgesehen ist, um auch einen Ablage-Kopf, zum Beispiel vom Kamm- (6) oder Augen-Typ, aufzunehmen, der mindestens ein solches Maß an Rotationsfreiheit besitzt, dass er auf der Wickelform (8) oder (1) mindestens eine Endlosfaser, wie Glasfaser und/oder Aramidfaser, aufbringen kann.

19. Schwimmkörper (11), **dadurch gekennzeichnet, dass** er mindestens aus einem Rumpfteil besteht, das durch ein Verfahren nach einem der Ansprüche 1 bis 13 hergestellt ist.

20. Schwimmkörper (11), **dadurch gekennzeichnet, dass** er mindestens aus einem Decksteil besteht, das durch ein Verfahren nach einem der Ansprüche 1 bis 13 hergestellt ist.

21. Schwimmgerät (11), wie ein Vergnügungsboot und/oder Sportboot und/oder gewerbsmäßig genutztes Boot, **dadurch gekennzeichnet, dass** es aus mindestens einem Rumpfteil und/oder einem Decksteil besteht, die durch ein Verfahren nach einem der Ansprüche 1 bis 13 hergestellt sind.

## Claims

1. Process for manufacturing floating bodies (11), such as a boat's hull or part of such a hull, **characterized in that** it comprises the combination of steps providing for:
- producing a first mandrel in the form of a preform (1), having substantially the external shape of the floating body to be manufactured (11) ;
- mounting the mandrel (1) on a winding apparatus and, optionally, subjecting it to a treatment of refining its external shape;
- covering the first mandrel (1), at least partly, by winding or filament winding resin-impregnated fibers so as to obtain an outer mold or countermold (7) whose internal surface will undergo a treatment, such as coating with a mold release and/or with a topcoat forming the external surface of the floating body to be manufactured;
- after solidification, cutting the countermold (7) into at least two demoldable portions, for example along a longitudinal plane of symmetry;
- producing a second mandrel in the form of a preform (8), having substantially the internal shape of the floating body to be manufactured (11);
- mounting the second mandrel (8) on a winding apparatus and, optionally, subjecting it to a treatment of refining its external shape;
- covering the second mandrel (8), at least partly, by winding or filament winding, with or without resin impregnation, in order to obtain a wound body which will be the floating body (11);
- putting the materials of the floating body between the second mandrel (8) and the countermold (7) under pressure;
- after solidifying the materials of the floating body (11), such as curing, disengaging the countermold (7) and/or subjecting the floating body (11) to a refining treatment, cutting out at least one reservation in the latter, for example for the passage or the joining of items of equipment such as masts, keel, deck house or the like, and/or for removing at least one portion of the mandrel (8).

2. Process according to Claim 1, **characterized in that** the step of producing the first mandrel (1) comprises a phase of assembling elements (2) made of synthetic material such as polystyrene foam and/or a phase of inflating an element of this first mandrel (1).

3. Process according to Claim 1, **characterized in that** the treatment of refining the external shape of the first mandrel (1) entails a grinding and/or machining operation, such as milling and/or turning, and a surface treatment, such as coating with a mold release and with a topcoat.

4. Process according to one of Claims 1 to 3, **characterized in that** the steps of cutting the countermold are carried out by mounting, on the winding apparatus, a cutting tool such as a milling cutter, disk or so-called "laser" particle-spraying system, this cutting being carried out, for example, in at least one longitudinal or transverse plane or in the height direction.

5. Process according to one of Claims 1 to 4, **characterized in that** the second mandrel (8) is produced in a similar way to the first mandrel (1), for example by assembling elements made of synthetic material, such as polystyrene foam, making provision to interpose at least one structural member, such as a partition, and/or by inflating at least one element of this mandrel (8).

6. Process according to one of Claims 1 to 5, **characterized in that** the treatment of refining the external surface of the second mandrel (8) entails a grinding and/or machining operation, such as milling and/or turning, and a surface treatment, such as coating with a mold release and with a topcoat.

7. Process according to one of Claims 1 to 6, **characterized in that** the step of covering the second mandrel (8) includes a phase of joining the floating body to be manufactured (11) to at least one structural member, such as a reinforcement and/or a superstructure support and/or a sandwich core.

8. Process according to one of Claims 1 to 7, **characterized in that** the step of pressurizing the materials of the floating body (11) entails increasing the volume of the second mandrel (8) and/or infusing a resin so as to obtain, on the one hand, optimal cohesion between these materials and the internal surface of the countermold (7) and, on the other hand, a defined resin content.

9. Process according to one of Claims 1 to 8, **characterized in that** the steps of cutting the floating body (11) are carried out by mounting, on the winding apparatus, a cutting tool such as a milling cutter, disk or so-called "laser" particle-spraying system, which cutting is, for example, carried out in at least one longitudinal or transverse plane, or in the height direction and which comprises at least one phase of cutting out reservations, for example for the passage and/or the joining of items of equipment such as masts, keel, chainplates, deck house or the like, and/or for removing at least one portion of the second mandrel (8).

10. Process according to one of Claims 1 to 9, **characterized in that** the treatment of refining the external surface of the floating body (11) entails a grinding and/or polishing operation and/or a surface treatment such as coating with a topcoat.

11. Mandrel (1) intended for implementing a process according to one of Claims 1 to 10, **characterized in that** it is composed of rings (2) made of synthetic foam which are joined together and/or of at least one inflatable element in the form of a preform having the external shape of the floating body to be manufactured (11).

12. Mandrel (8) intended for implementing a process according to one of Claims 1 to 10, **characterized in that** it is composed of rings (2) made of synthetic foam which are joined together and/or at least one inflatable element in the form of a preform having substantially the internal shape of the floating body to be manufactured (11).

13. Mandrel (8) or mandrel (1) according to Claim 11 or Claim 12, **characterized in that** it includes grooves (9), for example longitudinal and/or transverse grooves, and/or projecting devices (10), making it possible to wind and/or position at least one structural member such as a reinforcement and/or a superstructure support.

14. Apparatus for manufacturing a floating body (11), intended for implementing a process according to one of Claims 1 to 10, on which a mandrel (8) or (1) is mounted according to one of Claims 11 to 13, **characterized in that** this apparatus has a controlled spindle which drives the mandrel (8) or (1) in rotation and a tool holder (5) controlled to move along three translation axes.

15. Apparatus for manufacturing a body (11) according to Claim 14, **characterized in that** the tool holder (5) can receive cutting tools such as a milling cutter (4), a disk or a so-called "laser" particle-spraying system.

16. Apparatus for manufacturing a body (11) according to Claim 14, **characterized in that** the tool holder (5) can receive tools for spraying products such as a topcoat and a mold release agent.

17. Apparatus for manufacturing a body according to Claim 14, **characterized in that** the tool holder (5) can receive grinding and polishing tools.

18. Apparatus for manufacturing a body according to Claim 14, **characterized in that** the tool holder (5) can receive a laying-down head, for example of the comb (6) or eyelet type, having at least one degree of rotational freedom so as to lay down, on the mandrel (8) or (1), at least one continuous fiber such as a glass and/or carbon and/or aramid fiber.

19. Floating body (11), **characterized in that** it is composed of at least one hull portion manufactured by a process according to Claims 1 to 10 and obtained with the aid of a mandrel (8) and/or (1) according to Claims 11 to 13 and manufactured with the aid of an apparatus according to Claims 14 to 18.

20. Floating body (11) **characterized in that** it is composed of at least qne deck portion manufactured by a process according to Claims 1 to 10 and obtained with the aid of a mandrel (8) and/or (1) according to Claims 11 to 13 and manufactured with the aid of an apparatus according to Claims 14 to 18.

21. Floating body (11), such as a pleasure and/or racing and/or professional boat, **characterized in that** it is composed of at least one hull portion and/or deck portion which are manufactured by a process according to Claims 1 to 10 and obtained with the aid of a mandrel (8) and/or (1) according to Claims 11 to 13 and manufactured with the aid of an apparatus according to Claims 14 to 18.
